# EUROPEAN PATENT APPLICATION

(11) **EP 4 276 730 A1**
(43) Date of publication of application: **15.11.2023**
(21) Application number: 21917668.2
(22) Date of filing: 20.12.2021
(51) Int. Cl.: G06Q 50/10

(54) **PRODUCT PROVIDING SYSTEM, PRODUCT PROVIDING METHOD, AND PRODUCT PROVIDING PROGRAM**

(30) Priority: 08.01.2021 JP 2021001932
(71) Applicant: DIC Corporation, Tokyo 174-8520 (JP)
(72) Inventor: TAGAWA Daisuke, Tokyo 103-8233 (JP)
(74) Representative: TBK
(86) International application number: PCT/JP2021/046936
(87) International publication number: WO 2022/149448

(57) **Abstract**

Provided is a product provision system capable of presenting a product that matches a sensibility desired by a user. A product provision system for providing a product that matches a sensibility desired by a user includes: reception means for receiving sensibility information, the sensibility information representing a sensibility desired by a user; prediction means for predicting a property associated with the received sensibility information, the property being a property derived from a product's material; extraction means for extracting a product based on the predicted property; and output means for outputting the extracted product.

## Description

### Technical Field

The present invention relates to a product provision system, a product provision method, and a product provision program.

### Background Art

Examples of criteria considered by users in choosing products (including goods and services) include not only the function of such a product representing its intended working and the performance of the product representing the effectiveness, efficiency, or other attributes of the working, but also impressions that such a user has of the product, such as how the product is perceived through the five senses, or how the product appeals to the user's sensibility.

The invention described in PTL 1 is directed to a tactile sample of a product. The invention makes it possible to evaluate not only the uneven feel of the surface of a sample intended to represent a product, or the texture of the sample, but also the three-dimensional tactile sensation of the sample.

### Citation List

### Patent Literature

PTL 1: Japanese Unexamined Patent Application Publication No. 2020-98315

### Summary of Invention

### Technical Problem

The invention described in PTL 1 allows a user to sense the features of the actual product by touching the tactile sample, which greatly helps the user in choosing a product.

However, it has been difficult in the related art to present a product that expresses an impression desired to be formed by a user from the product. In the related art, to present a product that matches a sensibility desired by a user, for example, a person in charge of presenting such a product first listens to the user and then chooses a product. In that case, what product is chosen depends largely on the taste of the person in charge. It has been thus difficult to present a product that adequately matches the sensibility desired by the user.

The present invention is directed to addressing the issue mentioned above. Accordingly, it is an object of the present invention to provide a product provision system capable of presenting a product that matches a sensibility desired by a user.

### Solution to Problem

The present invention is directed to a product provision system for providing a product that matches a sensibility desired by a user. The product provision system includes: reception means for receiving sensibility information, the sensibility information representing a sensibility desired by a user; prediction means for predicting a property associated with the received sensibility information, the property being a property derived from a product's material; extraction means for extracting a product based on the predicted property; and output means for outputting the extracted product. Advantageous Effects of Invention

The present invention makes it possible to provide a product provision system capable of presenting a product that matches a sensibility desired by a user.

### Brief Description of Drawings

[Fig. 1] Fig. 1 is a block diagram illustrating the configuration of a product provision system according to an embodiment of the present invention.
[Fig. 2] Fig. 2 schematically illustrates how associations are made by using a predictor between sensibility information and product's material-derived properties (material's physical properties).
[Fig. 3] Fig. 3 schematically illustrates how a predictor is generated through machine learning.
[Fig. 4] Fig. 4 is a block diagram illustrating an exemplary configuration of an information processing apparatus according to an embodiment of the present invention.
[Fig. 5] Fig. 5 is a flowchart illustrating an exemplary process to be executed by an information processing apparatus according to an embodiment of the present invention.
[Fig. 6] Fig. 6 is a flowchart illustrating an exemplary process in which a predictor is generated through machine learning according to an embodiment of the present invention.

### Description of Embodiments

The present invention is directed to a product provision system for providing a product that matches a sensibility desired by a user.

The present invention is directed to a product provision system including: reception means for receiving sensibility information, the sensibility information representing a sensibility desired by a user; prediction means for predicting a property associated with the received sensibility information, the property being a property derived from a product's material; extraction means for extracting a product based on the predicted property; and output means for outputting the extracted product.

A product provision system according to the present invention is described below in detail with reference to the drawings.

### Embodiments

### (First Embodiment)

An embodiment of the present invention is described below. The present invention, however, is by no means limited to the embodiment described below.

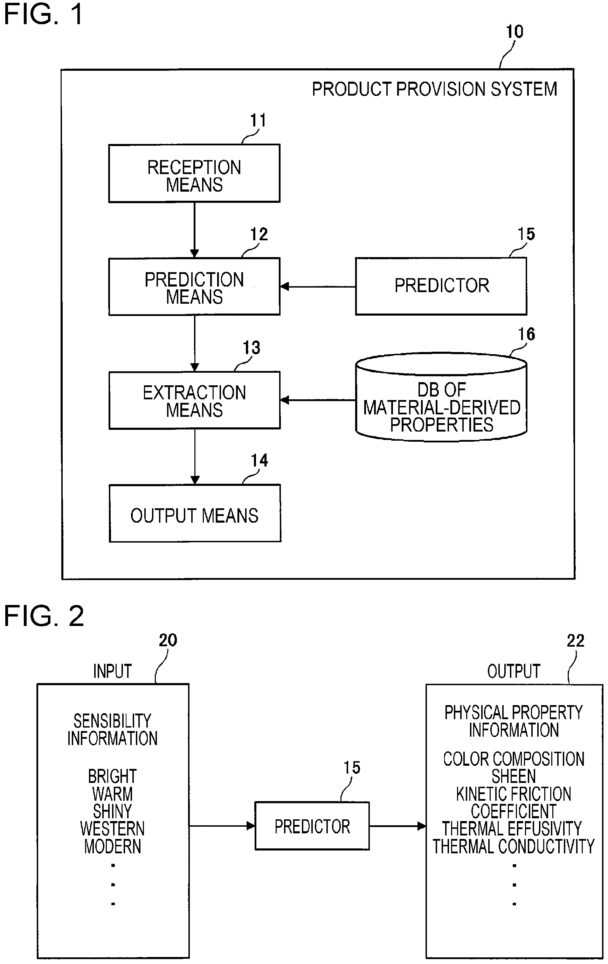

Fig. 1 is a block diagram illustrating the configuration of a product provision system according to an embodiment of the present invention. A product provision system 10 according to the embodiment is, for example, an information processing apparatus including a computer.

The product provision system 10 according to the embodiment includes reception means 11, prediction means 12, extraction means 13, output means 14, a predictor 15, and a database (DB) 16, which is a database of product's material-derived properties.

The product provision system 10 is configured to: receive sensibility information representing a sensibility desired by a user; based on an association between sensibility information and a product's material-derived property, predict the material property associated with the received sensibility information; extract a product based on the predicted property; and present the extracted product to the user.

In a more preferred implementation of the extraction of a product, the extraction means extracts the product based on the predicted property by use of at least information on products and on properties derived from a material possessed by the products.

The extraction means is capable of extracting the product corresponding to the predicted property through comparison between the predicted property and the material properties possessed by the products.

The product provision system 10 according to the present extracts a product that matches sensibility information representing a sensibility desired by a user, based on a product's material-derived property, and presents the extracted product to the user. In providing a product that matches sensibility information representing a sensibility desired by a user as described above, such a product is extracted based on a material property. As a result, a product that matches a sensibility desired by the user can be provided in a more appropriate and more practical way.

### <Reception Means 11>

The reception means 11 receives sensibility information representing a user's impression for a product.

The sensibility information includes information as to what perceptions the user makes about the product through the five senses. Examples of such perceptions include bright, warm, and shiny. The sensibility information also includes information as to what impressions the user has from the product. Examples of such impressions include a sense of luxury, a sense of reassurance, and comfort.

The sensibility information may include, for example, information as to what perceptions the user makes about the product through cross-modal interactions between five senses, which result from interactions of multiple senses of the five senses.

The sensibility information may be information such as "slightly warm" that represents the degree of the perceived sensation by using an ambiguous expression.

The sensibility information may include information numerically expressing the degree of the perceived sensation. This may include, for example, a case where the degree of "warmth" is expressed numerically such that the perceived "warmth" has a score of 5 on a 10-point scale.

The sensibility information may represent concepts about a product, such as "hospitality", "sense of satisfaction", and "beyond authentic."

According to the present invention, a product is extracted based on an association between sensibility information and a product's material-derived property. At this time, the association between sensibility information and a product's material-derived property is made through prediction of a material's physical property that is expected to allow expression of a desired sensibility. Accordingly, from the viewpoint of sensibilities effective for establishing such an association, it is preferred to use sensibility information attributable particularly to the senses of sight and touch among the five senses.

A more detailed description of sensibility information will be given later in the section <Prediction Means 12> below.

Products to be provided by the product provision system 10 correspond to all kinds of goods and services.

Examples of such a product may include not only a finished product but also some part or component of a finished product.

Examples of products to be provided by the product provision system 10 include interior wall coverings (to be also referred to as "interior coverings"), sheets, artificial leather, films, and fabrics.

### <Prediction Means 12>

The prediction means 12 predicts a product's material-derived property from sensibility information.

An association between sensibility information and a product's material-derived property is made by use of, for example, artificial intelligence (AI) such as rule-based AI or machine-learning AI.

Representative methods of machine learning may include statistical methods, random forest, support vector machine, neural networks such as deep learning, and data mining.

According to the present invention, material-derived properties are not limited to particular properties but can be chosen as appropriate as long as such properties can be associated with sensibility information. Examples of material-desired properties include material's physical properties.

In one example, material's physical properties can be expressed by evaluation values (physical property values) obtained as a result of testing with respect to material's properties such as physical properties, mechanical properties, thermal properties, electrical properties, and chemical properties. In one example, material's physical properties can be expressed by properties such as color composition (hue, lightness, and chroma), sheen, kinetic friction coefficient, thermal effusivity, thermal conductivity, heat flux, surface roughness, tensile strength, flexural strength, hardness, texture, and warm/cool sensation.

The prediction means 12 is described below in detail.

The following description assumes an example where an interior covering is to be provided to a user as a product.

If the product is an interior covering, sensibility information to be defined in the prediction means 12 is user's sensibility information with respect to the interior covering or to a space where the interior covering is to be used (e.g., the ambience of a room). The sensibility information is not particularly limited but may be chosen as appropriate according to the intended purpose. For example, it is preferable to, by taking the kind of a target product into consideration, choose a sensibility item effective for deriving a material property possessed by the product. For example, sensibility information with respect to an interior covering used for the wall of a room may include sensibility items listed in Table 1 below that are attributable particularly to senses such as sight and touch.

**[Table 1]**

| | | | | | |
|---|---|---|---|---|---|
| 1 | Warm | Cool | 17 | Refined | Unrefined |
| 2 | Bright | Dark | 18 | Shiny | Matte |
| 3 | Flashy | Subdued | 19 | Wet | Dry |
| 4 | Hard | Soft | 20 | Uneven | Even |
| 5 | Grand | Light | 21 | Elastic | Inelastic |
| 6 | Natural | Artificial | 22 | Stretchy | Non-stretchy |
| 7 | Simple | Intricate | 23 | Smooth | Rough |
| 8 | Elegant | Tacky | 24 | Slippery | Sticky |
| 9 | Western | Japanese | 25 | Thick | Thin |
| 10 | Modern | Classic | 26 | Durable | Fragile |
| 11 | Masculine | Feminine | 27 | Regular | Irregular |
| 12 | Sharp | Mild | 28 | Comfortable | Uncomfortable |
| 13 | Refreshing | Dreary | 29 | Reassuring | Disturbing |
| 14 | Soothing | Unsettling | 30 | Impressive | Unimpressive |
| 15 | Welcoming | Unwelcoming | 31 | Intense | Gentle |
| 16 | Luxurious | Cheap | | | |

If the product is an interior covering, examples of material-derived properties possessed by the interior covering may include material properties derived from the fabric of the interior covering and, if the fabric is coated with a paint, material properties derived from the coating (paint) .

According to the present invention, as a product's material-derived property, not only a property derived from a single material but also, if a product is made of multiple materials, properties derived from such multiple materials are to be considered. For example, in the case of the interior covering mentioned above, a material property derived from its fabric, and a material property derived from the paint applied to the fabric are to be considered together.

In making an association between sensibility information and a product's material-derived property, if a product is made of multiple materials as in the case of the interior covering mentioned above, such an association with sensibility information is preferably made by taking into account both a material property derived from the fabric and a material property derived from the paint.

For example, as illustrated in Fig. 2, a predictor that is stored in a storage unit, and that associates sensibility information with product's material-derived properties (material's physical properties) can be used to predict a material that exhibits a physical property associated with user's sensibility information.

Fig. 2 schematically illustrates how associations are made by using a predictor between sensibility information and product's material-derived properties (material's physical properties). In Fig. 2, reference sign 20 denotes sensibility information representing inputs to the predictor, reference sign 15 denotes the predictor, and reference sign 22 denotes property (physical property) information representing outputs from the predictor.

### <<Generation of Predictor>>

A predictor that associates sensibility information with a product's material-derived property (e.g., material's physical property) can be generated (output) by use of artificial intelligence (AI) such as rule-based AI or machine-learning AI.

For example, a predictor can be generated by describing, by use of a rule base, a procedure as to how each evaluation item in sensibility information is to be associated with the corresponding material's property (material's physical property).

For example, the procedure can be described such that sensibility information "bright" is represented by a predetermined lightness L* value in the L*a*b* color space, and that sensibility information "dark" is represented by a predetermined lightness L* value in the L*a*b* color space.

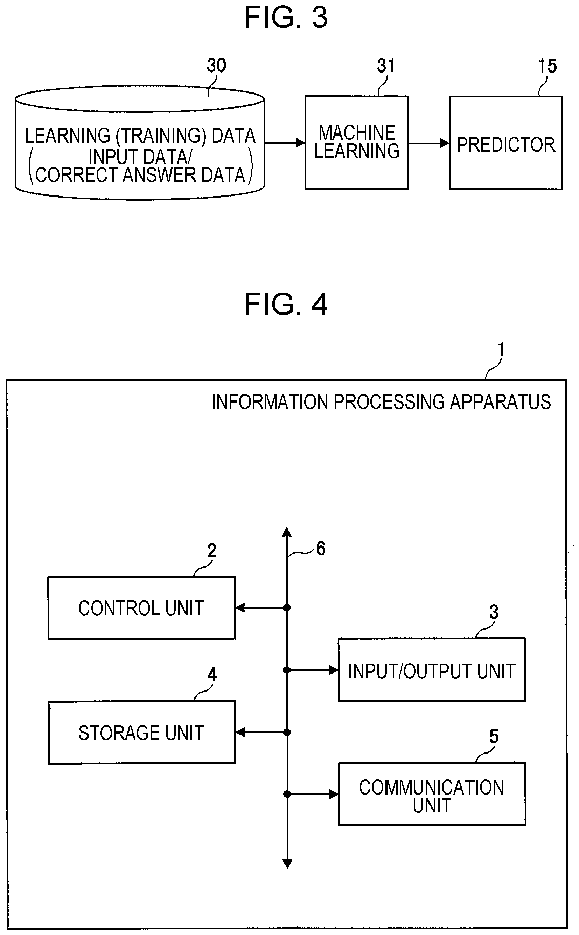

A method for generating a predictor other than the use of the rule base mentioned above is use of machining learning as illustrated in Fig. 3. As described above, methods for machine learning may include statistical methods, random forest, support vector machine, neural networks such as deep learning, and data mining.

Fig. 3 schematically illustrates how a predictor is generated through machine learning. In Fig. 3, reference sign 30 denotes learning (training) data, reference sign 31 denotes a machine learning process, and reference sign 15 denotes a predictor generated through machine learning.

Examples of training data may include data listed in Table 2 below.

**[Table 2]**

| Training data | | | | | | | | | | | |
|---|---|---|---|---|---|---|---|---|---|---|---|
| Input Data | Correct Answer Data | | | | | | | | | | |
| | Color (Hue, Lightness, Chroma) | | | Sheen (Hazy) Haze | Sheen Gloss | Hardness Flexural Young's Modulus [Gpa] | Roughness Mean Roughness Ra [µm] | Friction Kinetic Friction Coefficient | Warmth/Coolness Maximum Heat Flux [W/cm²] | ... | ... |
| | L* | C | H/deg | | | | | | | | |
| Bright | 81 | 61 | - | 45 | 45 | - | 2.2 | 0.6 | - | | |
| Warm | - | - | 36 | 221 | - | 0.1 | 7.3 | 1.2 | 0.19 | | |
| Flashy | 63 | 82 | - | 31 | 83 | - | 1.3 | - | - | | |
| Hard | 13 | - | - | 52 | - | 4.3 | 1.7 | - | - | | |
| Smooth | 69 | 66 | - | 27 | 25 | 0.9 | 1.2 | 0.6 | - | | |
| Durable | 76 | - | - | 66 | 62 | 4.2 | 1.1 | - | - | | |
| Shiny | - | 81 | - | 45 | 63 | 1.5 | 1.3 | 0.8 | - | | |
| Western | 71 | 45 | 22 | 134 | 15 | - | 4.6 | 1.3 | - | | |
| Modern | 48 | 85 | - | 60 | 51 | - | 1.9 | 0.7 | - | | |
| Reassuring | 81 | - | - | - | 15 | 3.1 | 2.4 | 1.1 | 0.4 | | |

If a predictor is to be generated through machine learning, the predictor can be generated as follows. As illustrated in Fig. 3, the learning (training) data 30 is acquired in advance, which includes sensibility information (input data) and product's material-derived properties (correct answer data) associated with the sensibility information. Then, the predictor 15 is generated by use of the learning (training) data 30 through the machine learning 31 based on, for example, a statistical method or a neural network.

The learning (training) data to be acquired in advance can be created by, for example, presenting a product to a person whose sensibility information is to be acquired, and acquiring the person's sensibility information corresponding to the product. The term "person" as used herein may refer to any person whose sensibility information is to be acquired, irrespective of whether such person refers to a single person or multiple persons.

From the viewpoint of generating a predictor with increased accuracy, it is desirable to prepare a large amount of learning (training) data whose input data and correct answer data contain well-balanced items.

### <Extraction Means 13>

The extraction means 13 extracts a product based on a material property obtained by the prediction means 12. This allows for extraction of a product that matches sensibility information received by the reception means 11.

In a more preferred implementation of the extraction means 13, the extraction means 13 may, by using at least information on products and on material-derived properties possessed by the products, compare the material's property obtained by the prediction means 12 with the material properties possessed by the products, and thereby extract a product corresponding to the predicted property.

For example, if information on the material's properties is information related to the material's physical properties, data as illustrated in Table 3 may be created in advance. The data represents, for a material used in individual products, evaluation results on the physical properties exhibited by the material.

Through comparison between a predicted material's property (physical property) with the properties (physical properties) exhibited by the material of individual products as illustrated in Table 3, a product that matches desired sensibility information can be extracted.

**[Table 3]**

| Product Name | Product No. | Product's Material Composition | | Color (Hue, Lightness, Chroma) | | | Sheen (Hazy) Haze | Sheen Gloss | Hardness Flexural Young's Modulus [Gpa] | Roughness Mean Roughness Ra [µm] | Friction Kinetic Friction Coefficient | Warmth/Coolness Maximum Heat Flux [W/cm²] | ... | ... |
|---|---|---|---|---|---|---|---|---|---|---|---|---|---|---|
| | | Fabric | Paint | L* | C | H/deg | | | | | | | | |
| Interior Covering | 101101 | 101 | 101 | 85 | 1 | 4 | 62 | 122 | 3.5 | 1.3 | 0.9 | 0.53 | | |
| | 102102 | 102 | 102 | 18 | 2 | 5 | 35 | 85 | 3.4 | 1.5 | 0.8 | 2.10 | | |
| | 103103 | 103 | 103 | 46 | 61 | 63 | 152 | 45 | 3.6 | 1.6 | 1.5 | 1.33 | | |
| | 104104 | 104 | 104 | 49 | 45 | -165 | 62 | 15 | 3.5 | 15 | 0.7 | 1.27 | | |
| | 105101 | 105 | 101 | 87 | 3 | 6 | 45 | 83 | 3.3 | 17 | 1.2 | 0.76 | | |
| | 106102 | 106 | 102 | 19 | 2 | 5 | 27 | 62 | 3.5 | 30 | 0.6 | 1.72 | | |
| | 107103 | 107 | 103 | 48 | 59 | 60 | 83 | 25 | 3.6 | 50 | 0.8 | 1.20 | | |
| Sheet | 201201 | 201 | 201 | 83 | 2 | 4 | 30 | 22 | 1.2 | 0.7 | 1.3 | 0.34 | | |
| | 202202 | 202 | 202 | 19 | 1 | 2 | 48 | 66 | 1.1 | 15 | 1.2 | 0.35 | | |
| | 203203 | 203 | 203 | 41 | 49 | -83 | 49 | 51 | 1.3 | 15 | 1.3 | 0.16 | | |
| | 204204 | 204 | 204 | 33 | 23 | 36 | 31 | 85 | 1.2 | 15 | 1.1 | 0.85 | | |
| | 205201 | 205 | 201 | 84 | 3 | 2 | 121 | 25 | 1.0 | 17 | 1.4 | 0.45 | | |
| | 206202 | 206 | 202 | 15 | 1 | 5 | 15 | 115 | 1.1 | 31 | 1.3 | 0.35 | | |
| | 207203 | 207 | 203 | 44 | 50 | -80 | 85 | 22 | 1.3 | 52 | 1.2 | 0.22 | | |
| Artificial Leather | 301301 | 301 | 301 | 84 | 3 | 5 | 89 | 60 | 0.3 | 8.3 | 1.1 | 0.19 | | |
| | 302302 | 302 | 302 | 21 | 1 | 5 | 134 | 45 | 0.2 | 25.3 | 0.5 | 0.18 | | |
| | 303303 | 303 | 303 | 44 | 38 | 47 | 125 | 41 | 0.3 | 12.7 | 0.6 | 0.15 | | |
| | 304304 | 304 | 304 | 28 | 15 | 53 | 79 | 46 | 0.4 | 6.2 | 0.9 | 0.17 | | |
| | 305301 | 305 | 301 | 85 | 2 | 7 | 21 | 15 | 1.1 | 2.5 | 0.8 | 0.16 | | |
| | 306302 | 306 | 302 | 17 | 3 | 6 | 34 | 8 | 1.2 | 1.6 | 0.6 | 0.15 | | |
| | 307303 | 307 | 303 | 42 | 40 | 45 | 29 | 12 | 1.3 | 5.2 | 0.7 | 0.17 | | |
| ... | ... | ... | ... | | | | | | | | | | | |
| ... | ... | ... | ... | | | | | | | | | | | |

All of the properties (physical properties) listed in Table 3 can be measured by commercially available apparatuses. For example, the L, C, and H values in the "Color" field are obtained by using a spectrophotometric colorimeter (such as CM-26dd from Konica Minolta, Inc.). The flexural Young's modulus in the "Hardness" field is obtained by using a material testing machine (such as Autograph AGS-X from Shimadzu Corporation). The kinetic friction coefficient in the "Friction" field is obtained by using a tribometer (such as Tribogear TYPE-14 from Shinto Scientific Co., Ltd.). The maximum heat flux is obtained by using a heat flux meter (such as KES-F7 from Kato Tech Co., Ltd.).

As for the extraction result from Table 3, there may be a single such result or multiple such results. If there are multiple extraction results, sensibility information or other conditions such as product/service type may be further added to narrow down the results.

If multiple products correspond to desired sensibility information, it is possible to either output (present) all of the products, or output (present) a product that seems most appropriate among acquired data.

If it is desired to present a more appropriate product matching desired sensibility information irrespective of the presence or absence of such an existing product, a material and its properties (physical properties) that are associated with the desired sensibility information can be output (presented) to suggest a material that allows for fabrication of such a more appropriate product. This makes it possible to fabricate (provide) such a more appropriate product.

### <Output Means 14>

The output means 14 outputs (presents) a product extracted by the extraction means 13 to a user. Examples of the method for outputting the product may include: providing text display of information for identifying the product, such as the product's name or composition; providing audio output of information for identifying the product; and providing a still image or video of the product.

Fig. 4 is a block diagram illustrating an exemplary configuration of an information processing apparatus according to a first embodiment of the present invention. The product provision system 10 illustrated in Fig. 1 is implemented by an information processing apparatus 1 illustrated in Fig. 4.

The information processing apparatus 1 includes the following components: a control unit 2 that controls overall operation; an input/output unit 3 that allows input/output of various information; a storage unit 4 that stores various data, programs, or other information; a communication unit 5 that communicates with an external environment; and an internal bus 6 that connects the above-mentioned blocks in a manner that allows mutual communication.

The reception means 11 is implemented by, for example, the input/output unit 3 and the control unit 2. The prediction means 12 is implemented by, for example, the storage unit 4 and the control unit 2. The extraction means 13 is implemented by, for example, the storage unit 4 and the control unit 2. The output means 14 is implemented by, for example, the input/output unit 3 and the control unit 2.

The information processing apparatus 1 is, for example, a computer. The information processing apparatus 1 may be an apparatus that can be carried by a subject, such as a smartphone, a PDA, a tablet, or a notebook computer, or may be a computer that is fixed at its installed location rather than being carried by a subject. PDA is an abbreviation for personal digital assistant.

The control unit 2 is a device called CPU, MCU, or MPU. For example, a program stored in the storage unit 4 is executed by the control unit 2. CPU is an abbreviation for central processing unit. MCU is an abbreviation for microcontroller unit. MPU is an abbreviation for microprocessor unit.

The input/output unit 3 is a device that allows input/output of information from/to a user who operates the information processing apparatus 1. The input/output unit 3 allows information or a signal to be input/output by means of a display, a keyboard, a mouse, a button, a touch screen, a printer, a microphone, a speaker, or other devices. According to the embodiment, the input/output unit 3 serves as, for example, a keyboard. Sensibility information is input with the keyboard. According to the embodiment, the input/output unit 3 serves as at least a display. A product associated with received sensibility information is displayed on the display. In another example, the control unit 2 may have a speech recognition function, and the input/output unit 3 may include a microphone and a speaker, so that sensibility information is input by voice with the microphone, and a product associated with the sensibility information received with the speaker is output.

The storage unit 4 is, for example, a device such as a ROM, a RAM, an HDD, or a flash memory. The storage unit 4 stores programs or various data to be executed by the control unit 2. ROM is an abbreviation for read only memory. RAM is an abbreviation for random access memory. HDD is an abbreviation for hard disk drive.

The communication unit 5 performs communication with an external environment. The communication to be performed by the communication unit 5 may be either wired or wireless. Any communication method may be used for the communication to be performed by the communication unit 5. The control unit 2 is capable of transmitting/receiving various data such as text data, image data, and audio data by means of the communication unit 5. The control unit 2 may use the communication unit 5 instead of the input/output unit 3.

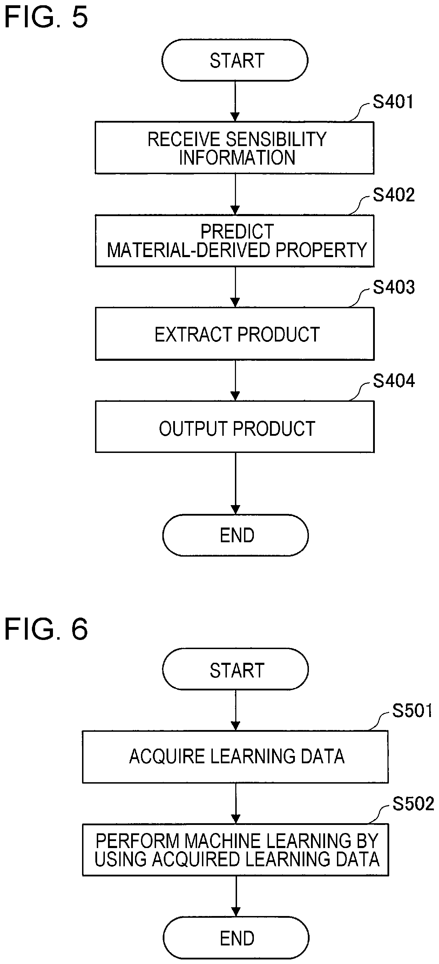

Fig. 5 is a flowchart illustrating an exemplary process to be executed by the information processing apparatus 1 according to the first embodiment of the present invention.

At step S401, the control unit 2 serving as the reception means 11 receives input of sensibility information from the input/output unit 3.

At step S402, the control unit 2 serving as the prediction means 12 predicts, by means of the predictor 15 stored in the storage unit 4, a product's material-desired property (physical property) associated with the sensibility information received at step S401.

At step S403, the control unit 2 serving as the extraction means 13 extracts a product from the property (physical property) predicted at step S402, by using the information (database) 16 stored in the storage unit 4, the information (database) 16 being information on products and material-derived properties (physical properties) possessed by the products.

At step S404, the control unit 2 serving as the output means 14 provides (presents) the product extracted at step S403 to a user by means of the input/output unit 3.

The product provision system 10 according to the embodiment makes it possible to, regardless of the taste of a person who operates the product provision system 10, output (present) a product that expresses an impression desired to be formed by a user from the product, by using an association with a product's material-derived property. That is, the product provision system 10 according to the embodiment makes it possible to present a product that matches a sensibility desired by the user.

Fig. 6 is a flowchart illustrating an exemplary process in which the predictor 15 to be used by the prediction means 12 is generated by a learning apparatus through machine learning.

The learning apparatus is similar in configuration to the information processing apparatus 1 illustrated in Fig. 4. The learning apparatus includes, for example, the control unit 2, the input/output unit 3, the storage unit 4, the communication unit 5, and the internal bus 6. Although an information processing apparatus to be used for the learning apparatus is normally different from the information processing apparatus constituting the product provision system, the information processing apparatus to be used for the learning apparatus may be the same as the information processing apparatus constituting the product provision system.

At step S501 in Fig. 6, the control unit 2 acquires the learning (training) data 30 by means of the input/output unit 3. The learning (training) data 30 includes, for example, sensibility information, and product's material-derived properties associated with the sensibility information. At the next step S502, the control unit 2 performs the machine learning 31 by using the learning (training) data 30 acquired at step S501. As a result, the predictor 15 is generated (output).

Although preferred embodiments of the present invention have described above, these embodiments are not intended to be limiting of the present invention. An object of the present invention is also accomplished through supply, to a system or an apparatus, of a storage medium storing a program code (computer program) for implementing the functional features of the embodiments mentioned above, and through reading and execution of the program code stored in the storage medium by a computer of the system or the apparatus to which the storage medium has been supplied. In this case, the program code read from the storage medium implements the functional features of the embodiments mentioned above by itself. The storage medium storing the program code thus constitutes the present invention. Although the above embodiments are directed to a case where a computer executes a program to thereby function as individual units that perform processing, such processing may in part or in whole be implemented by a dedicated electronic circuit (dedicated hardware).

The present invention is not limited to the particular embodiments described but can be practiced with various modifications/alterations within the spirit and scope of the present invention as defined by the appended claims. Components described above with reference to the embodiments can be replaced as appropriate with existing components or other existing features, and allow for various variations including combinations with other existing components. Reference Signs List

- 10: product provision system
- 11: reception means
- 12: prediction means
- 13: extraction means
- 14: output means

## Claims

1. A product provision system for providing a product that matches a sensibility desired by a user, the product provision system comprising:
reception means for receiving sensibility information, the sensibility information representing a sensibility desired by a user;
prediction means for predicting a property associated with the received sensibility information, the property being a property derived from a product's material;
extraction means for extracting a product based on the predicted property; and
output means for outputting the extracted product.

2. The product provision system according to Claim 1,
wherein in the prediction means, an association between sensibility information and a property derived from a product's material is made by use of artificial intelligence (AI) comprising rule-based AI or machine-learning AI.

3. The product provision system according to Claim 1 or 2, wherein the property derived from the product's material is represented by a physical property of the product's material.

4. The product provision system according to any one of Claims 1 to 3, wherein the extraction means extracts the product from the predicted property by use of at least information on products and on properties derived from a material possessed by the products.

5. The product provision system according to any one of Claims 1 to 4, wherein the sensibility information is sensibility information obtained through five senses or through cross-modal interactions between five senses.

6. A product provision method for providing a product that matches a sensibility desired by a user, the product provision method comprising:
a reception step of receiving sensibility information, the sensibility information representing a sensibility desired by a user;
a prediction step of predicting a property associated with the received sensibility information, the property being a property derived from a product's material;
an extraction step of extracting a product based on the predicted property; and
an output step of outputting the extracted product.

7. The product provision method according to Claim 6, wherein in the prediction step, an association between sensibility information and a property derived from a product's material is made by use of artificial intelligence (AI) comprising rule-based AI or machine-learning AI.

8. The product provision method according to Claim 6 or 7, wherein the property derived from the product's material is represented by a physical property of the product's material.

9. The product provision method according to any one of Claims 6 to 8, wherein the extraction method includes extracting the product from the predicted property by use of at least information on products and on properties derived from a material possessed by the products.

10. The product provision method according to any one of Claims 6 to 9, wherein the sensibility information is sensibility information obtained through five senses or through cross-modal interactions between five senses.

11. A product provision program, the product provision program causing a computer to function as the reception means, the prediction means, the extraction means, and the output means according to any one of Claims 1 to 5.
